# NEUE EUROPÄISCHE PATENTSCHRIFT

(11) **EP 0 850 147 B2**
(45) Veröffentlichungstag und Bekanntmachung des Hinweises auf die Entscheidung über den Einspruch: **11.08.2004**
(45) Hinweis auf die Patenterteilung: 02.06.1999
(21) Anmeldenummer: 96931004.4
(22) Anmeldetag: 03.09.1996
(51) Int. Cl.: B60D 1/52, B60D 1/54

(54) **ANHÄNGERKUPPLUNG FÜR KRAFTFAHRZEUGE**
MOTOR VEHICLE TRAILER COUPLING
DISPOSITIF D'ATTELAGE DE REMORQUE POUR VEHICULES AUTOMOBILES

(30) Priorität: 13.09.1995 DE 19533670; 07.12.1995 DE 19545620; 15.02.1996 DE 19605570
(43) Veröffentlichungstag der Anmeldung: 01.07.1998
(73) Patentinhaber: Jaeger Cartronix GmbH, 61169 Friedberg (DE)
(72) Erfinder: IFFLÄNDER, Wolfgang, J., F., D-28357 Bremen (DE)
(74) Vertreter: KEIL & SCHAAFHAUSEN
(86) Internationale Anmeldenummer: PCT/EP1996/003850
(87) Internationale Veröffentlichungsnummer: WO 1997/010111

(56) Entgegenhaltungen:
- EP-A- 0 274 788
- DE-A- 3 442 514
- DE-U- 1 665 838
- DE-U- 9 109 699
- FR-A- 2 476 554
- FR-A- 2 513 576
- FR-A- 2 531 381
- US-A- 3 545 791
- US-A- 3 717 362
- US-A- 4 570 966

## Beschreibung

Die Erfindung betrifft eine Anhängerkupplung für Kraftfahrzeuge, mit einer Zugstange, die zwischen einer Ruhestellung und einer Betriebsstellung verstellbar und formschlüssig verriegelbar ausgebildet ist.

Solange Anhängerkupplungen nicht benutzt werden, stört die über den hinteren Stoßfänger hinausragende Kugelstange. sind.

Aus der US-A-3,545,791 ist eine Anhängerkupplung für Kraftfahrzeuge bekannt, die schwenkbar an einem Rahmen des Fahrzeugs angebracht ist. Ziel dieser bekannten Vorrichtung ist es, eine Kupplung vorzusehen, die für Fahrzeuge mit am hinteren Ende vorgesehener Ladeplattform die Möglichkeit bietet, an dieser Plattform angebracht zu werden, ohne den normalen Gebrauch der Plattform zu behindern. Zu diesem Zweck ist sie leicht schwenkbar konstruiert. Das Ausklappen und Einklappen erfolgt manuell.

Aus der FR-A-2 476 554 ist weiter eine axial verstellbare Anhängerkupplung bekannt, die formschlüssig verriegelt ist, wobei jedoch zur Einnahme der Endlagen manuell die Verriegelungen gelöst und wieder gesetzt werden müssen, um die Kupplung selbst zu verschieben und zu drehen.

Die EP-A- 0 274 788 zeigt eine in der Länge axial verstellbare Anhängerkupplung ohne Motor.

Die DE-A- 34 42 514 beschreibt eine demontierbare Kupplung, die axial in ein Rohrstück eingesteckt werden kann, an deren Ende sich eine Schraube befindet, die in ein entsprechendes Innengewinde der eingesteckten Kupplung eingeschraubt werden kann, um sie zu sichern. Die Drehung der Schraube kann zur Sicherung motorisch erfolgen. Die DE-U- 91 09 699.5 zeigt dagegen eine Kupplung, die am Fahrzeug verbleiben kann und bei Nichtbenutzung wegklappbar gestaltet ist. Sowohl in der vertikalen als auch alternativ in der horizontalen Richtung ist diese Kupplung klappbar. Beim Ausklappen wird sie von einem unter Federdruck stehenden Riegel sebsttätig verriegelt. Zum Einldappen muß der Riegel manuell in die geöffnete Stellung verschoben werden. In der FR-A-2,513,576 wird dagegen eine axial verschiebbare Anhängerkupplung gezeigt, die manuell durch einen sehr klobigen separaten Spindelmutterantrieb verschiebbar ist.

Aus der US-A-4 570 966 ist eine in einem Gehäuse aufgenommene Anhängerkupplung bekannt, welche unter der Ladefläche eines Lastwagens angeordnet ist. Mit Hilfe eines Hydraulikzylinders kann gegen die Wirkung einer Feder über einen Block und eine um einen geringen Winkel schwenkbare Hubplatte eine Kupplungskugel nach oben geschwenkt werden, so dass diese durch eine Öffnung in der Ladefläche hindurch in eine Betriebsstellung angehoben wird. Durch Zurückziehen des Blockes kann die Kupplungskugel wider in eine Ruhestellung abgesenkt werden. Beim Auf- und Abschwenken verändert sich die Anhängerkupplung in ihrer Länge praktisch nicht.

Nachteilig an den bekannten Anhängerkupplungen wird allgemein empfunden, daß die Konstruktionen unbequem zu handhaben sind und sehr viel Raum beanspruchen.

Aufgabe der Erfindung ist es, eine Anhängerkupplung anzugeben, die es bei kompakter Bauform ermöglicht, ohne körperliche Anstrengung eine Anhängerkupplung aus einer gesicherten Betriebsstellung in eine nicht störende Ruhestellung zu bringen und bei Bedarf auch wieder ohne Anstrengung in die gesicherte Betriebsstellung zu versetzen

Diese Aufgabe wird durch die Merkmale des Patentanspruchs 1 oder 7 gelöst.

Weitere vorteilhafte Ausgestaltungen der Erfindung sind in den Unferansprüchen 2 bis 6 und 8 bis 11 beschrieben.

Die Erfindung wird in einer bevorzugten Ausführungsform unter Bezugnahme auf eine Zeichnung beschrieben, wobei weitere vorteilhafte Einzelheiten den Figuren der Zeichnung zu entnehmen sind. Funktionsmäßig gleiche Teile sind dabei mit denselben Bezugszeichen versehen.

Die Zeichnungen zeigen im einzelnen:
- Figur 1: eine Aufsicht auf eine erfindungsgemäße Anhängerkupplung mit axialer Verstellung in Ruhestellung,
- Figur 2: eine Seitenansicht der erfindungsgemäßen Anhängerkupplung gemäß Figur 1,
- Figur 3: eine Seitenansicht einer Kugelstange gemäß Figur 1,
- Figur 4: eine Aufsicht auf eine Hülse zur Aufnahme der Kugelstange gemäß Figur 3,
- Figur 5: eine Seitenansicht der Hülse gemäß Figur 4,
- Figur 6: eine Ansicht gemäß Pfeil A in Figur 5,
- Figur 7: eine Seitenansicht einer alternativen Ausführungsform mit schwenkbarer Kugelstange,
- Figur 8: einen Schnitt gemäß Linie B-B von Figur 7 durch den Antrieb der Kugelstange,
- Figur 9: eine Seitenansicht einer weiteren Ausführungsform mit seitlich schwenkbarer Kuppelstange, und
- Figur 10: eine Draufsicht der Ausführungsform gemäß Figur 9.

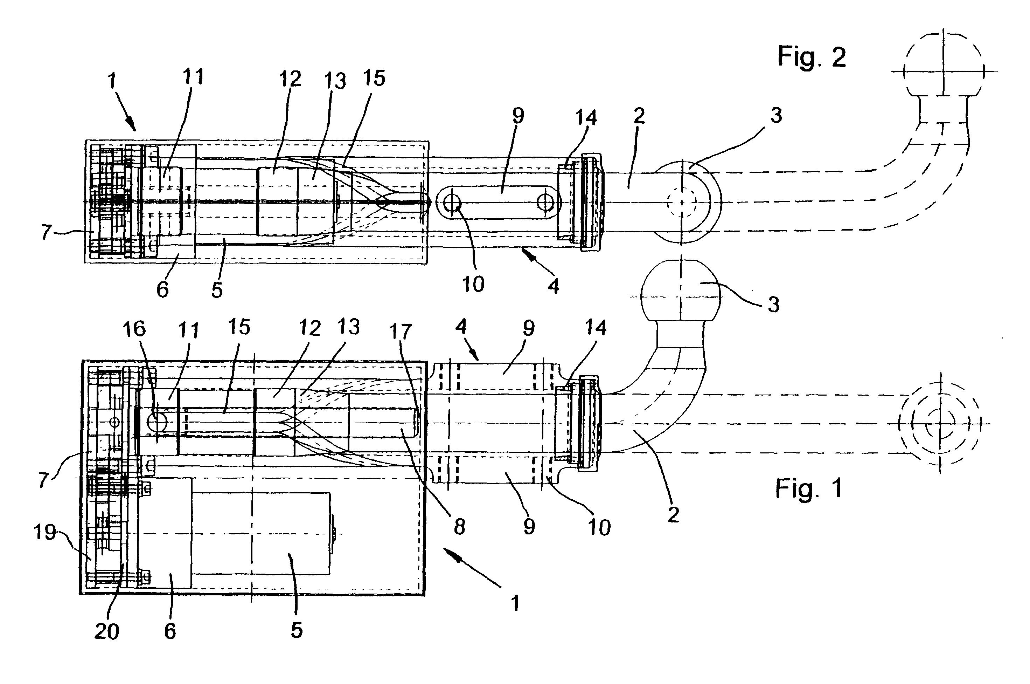

In Figur 1 bezeichnet 1 eine verstellbare Anhangerkupplung. Sie besteht im wesentlichen aus einer axial verstellbaren Stange 2, deren äußeres Ende eine Kugel 3 trägt, sowie einer Führungsshülse 4, einem Motor 5 mit Planetengetriebe 6, einem Stirnradgetriebe 7 und einer Verstellspindel 8.

Die Führungshülse 4 trägt beidseitig je einen Montageflansch 9, in dem Gewindebohrungen 10 eingebracht sind. Die gesamte Anhängerkpplung 1 wird an ein Fahrzeug montiert, indem sie mittels Schrauben an eine entsprechende Lasche des Fahrzeugs befestigt wird. Dabei greifen Schrauben in die Gewindebohrungen 10 ein.

Die Stange 2 wird von der Führungshülse 4 aufgenommen. Zu diesem Zweck weist die Stange 2 eine hintere Führungssfläche 11 und eine vordere Führungssfläche 12 auf, die über einen Konus 13 in die etwas schlankere Stange 2 übergeht.

Außerdem ist in Führungshülse 4 ein ringförmiger Innenkonus 14 befestigt. Schließlich sind in der Führungenshülse der Führungsschlitze 15 eingeformt.

Auf der Stange 2 ist im hinteren Bereich eine stiftförmige Kulisse 16 befestigt, die in den Führungsschlitz 15 eingreift. Außerdem ist in der Stange 2 eine Sackbohrung mit Innengewinde 17 eingebracht.

Die Verstellspindel 8 ist in das genannte Innengewinde 17 eingeschraubt und wird über das Stimradgetriebe 7 sowie Planetengetriebe 6 von einem elektrischen Motor 5 gedreht. Die einzelnen Zahnräder des Getriebes 7 sind zwischen seitlichen Platten 19 und 20 gelagert. Mit der Platte 20 sind das Gehäuse des Planetengetriebes 6 und die Führungenshülse 4 fest verbunden. Die Verstellspindel 8 ist ebenfalls in den Platten 19 und 20 drehbar gelagert, so daß sie je nach Wunsch von dem elektrischen Motor 5 gedreht werden kann.

Wird der Motor 5 in die entsprechende Richtung betrieben, so dreht sich also die Verstellspindel 8.

Dabei wird Stange 2, die als Mutter auf der Verstellspindel 8 angeordnet ist und gegen Verdrehen durch die Kulisse 16 gesichert ist, nach außen geschoben. Bei dieser axialen Bewegung wird die Stange von den Führungsflächen 11 und 12 in der Hülse geführt. Sie erreicht ihre Endlage, wenn der Außenkonus 13 fest in dem ringförmigen Innenkonus 14 sitzt.

Solange die Führungsschlitze 15 in axialer Richtung verlaufen, behält Stange 2 ihre radiale Lage bei. Nach etwa der halben Verstellstrecke gehen die Führungsschlitze 15 in einen wendelförmigen Verlauf über. Dies hat zufolge, daß sich die Stange 2 beim Ausfahren dann entsprechend dreht, so daß die Kugel 3 in der Betriebsstellung vertikal nach oben zeigt.

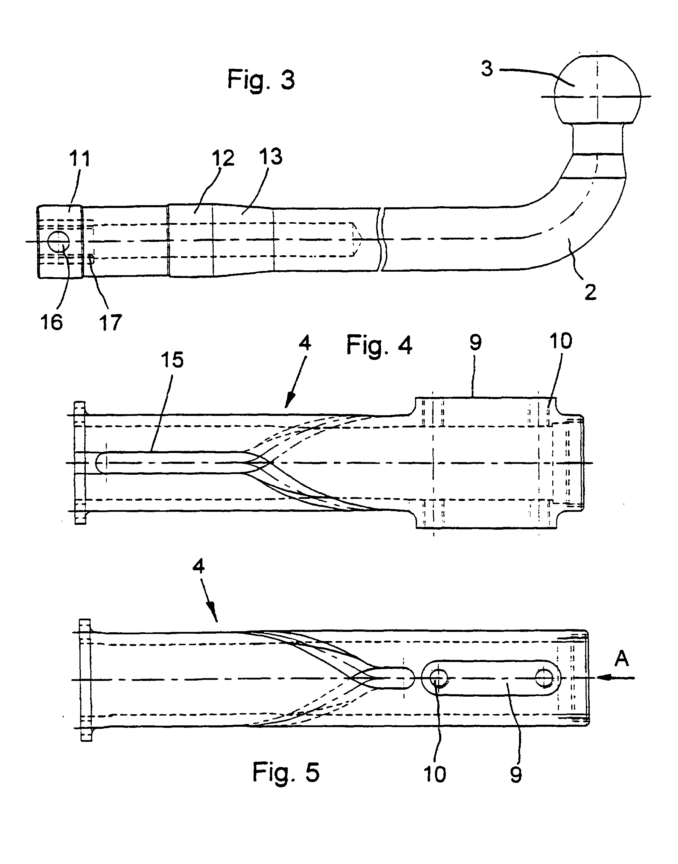

Zum besseren Verständnis sind die wesentlichen Teile in den Figuren 3 bis 6 nochmals einzeln dargestellt.

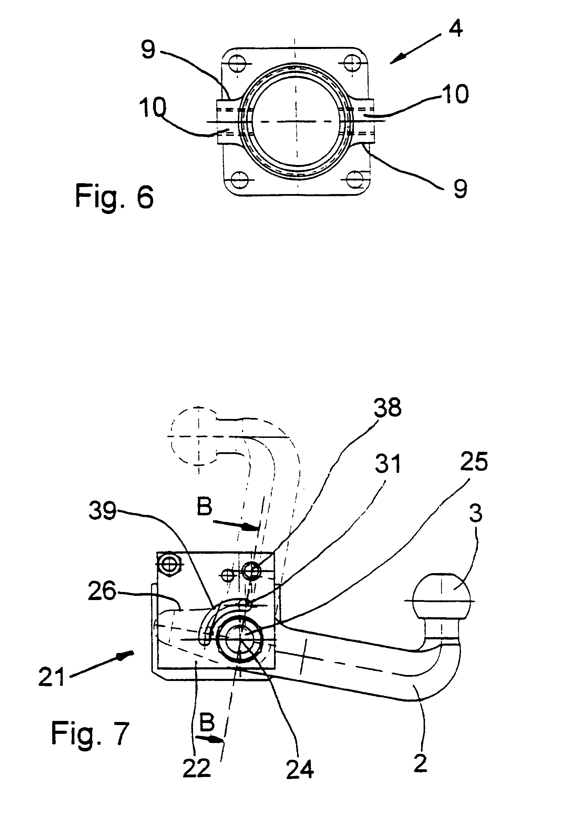

Eine alternative Ausführungsform einer Anhängerkupplung ist in Figur 7 dargestellt. Bei dieser Ausführungsform wird die Stange 2 nicht axial verschoben, sondern um ihre Achse geschwenkt.

Zum leichteren Verständnis ist lediglich die Stange 2 mit ihrem Schwenkantrieb 21 dargestellt, wobei bekannte zusätzliche Antriebsteile wie z.B. ein Getriebemotor, nicht dargestellt sind.

Figur 7 zeigt einen Schwenkantrieb bei dem die Stange 2 um etwa 90° nach oben geschenkt werden kann.

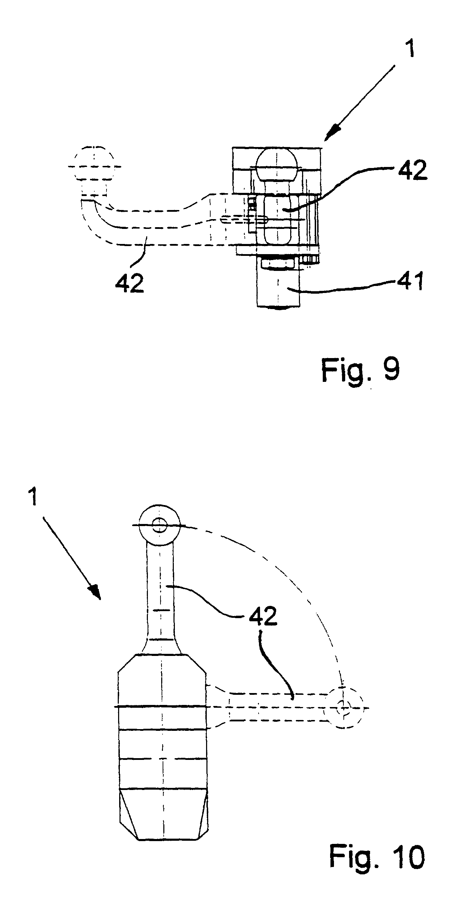

Bei entsprechend abgewandelter Einbaulage und dafür angepaßter Stange 42 kann ein modifizierter Schwenkantrieb 41 auch für ein horizontales Schwenken der Stange 42 verwendet werden. Ein derartiger Schwenkantrieb 41 ist in den Figuren 9 und 10 dargestellt.

Bei der in Figur 7 dargestellten Ausführung wird die Stange 2 jedoch etwa vertikal nach oben geschwenkt Zu diesem Zweck ist sie zwischen zwei Platten 22 und 23 um Achse 24 auf dem Drehbolzen 25 schwenkbar gelagert.

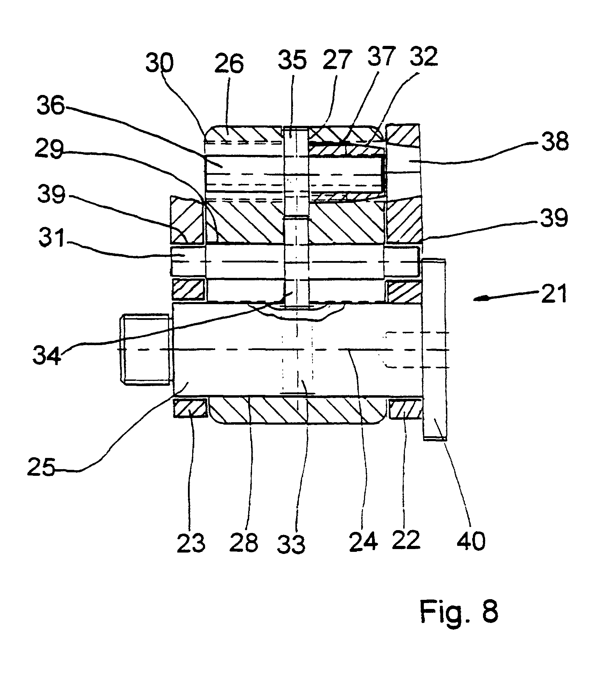

Außerdem weist die Stange 2 einen Schenkel 26 auf, dessen Funktion aus Figur 8 ersichtlich wird.

In Figur 8 ist ein Schnitt entsprechend der in Figur 7 erfolgten Markierung gezeigt. Im Bereich des Schenkels 26 ist somit Stange 2 mit einem Schlitz 27 versehen. Außerdem sind senkrecht zur Schlitzebene eine Lagerbohrung 28 für den Drehbolzen 25, eine Lagerbohrung 29 für eine Ritzelwelle 31 sowie eine Bohrung mit Innengewinde 30 für einen Sperrkonus 32 vorgesehen.

Wie erwähnt, ist der Drehbolzen 25 zwischen zwei Platten 22 und 23 drehbar gelagert. Im Bereich des Schlitzes 27 der Stange 2 weist der Drehbolzen 25 eine Verzahnung 33 auf. In diese Verzahnung 33 greift ein Zahnrad 34 ein, daß auf der Ritzelwelle 31 gelagert ist. Mit Zahnrad 34 kämmt ein weiteres Zahnrad 35, das drehfest mit einer Welle 36 verbunden ist.

Auf Welle 36 ist beidseitig vom Zahnrad 35 je ein Sperrkonus 32 drehfest, aber axial verschiebbar, gelagert. Dieser Sperrkonus 32 weist ein Außengewinde 37 auf, daß in das Innengewinde 30 eingreift. Für den Sperrkonus 32 ist in den Platten 22 und 23 eine Verriegelungsöffnung 38 vorgesehen.

In der in Figur 8 dargestellten Lage sollte der Sperrkonus 32 üblicherweise in die Verriegelungsöffnung 38 eingefahren sein. Zur besseren Erkennbarkeit ist er in einer Lage dargestellt, bei der die Stange 2 geschwenkt werden kann.

Die Enden der Ritzelwelle 31 sind in bogenförmigen Schlitzen 39 der Platten 22 und 23 gefuhrt. Die übrigen in Figur 7 dargestellten Bohrungen der Platte 22 dienen ihrer Befestigung am Fahrzeug bzw. der Befestigung eines weiteren Getriebes mit einem entsprechenden elektrischen Antrieb oder der Verbindung mittels Abstandsbolzen.

Die in Figur 7 mit durchgezogenen Linien dargestellte Lage der Stange 2 entspricht ihrer Betriebsstellung. Zum Schwenken der Stange 2 wird nun ein mit dem Drehbolzen 24 fest verbundenes Zahnrad 40 angetrieben. Da zunächst der Sperrkonus 32 in die Verriegelungsöffnung 38 der Platte 23 eingefahren ist, kann die Stange 2 noch nicht um die Achse 24 schwenken. Statt dessen wird über die Verzahnung 33 und über das Zahnrad 34 das Zahnrad 35 gedreht. Da es fest mit Welle 36 verbunden ist, nimmt die Welle 36 den Sperrkonus 32 mit. Da sein Außengewinde 37 in Eingriff mit dem Innengewinde 30 steht, bewegt sich dabei der Sperrkonus 32 axial nach innen, bis er vollständig aus der Verriegelungsöffnung 38 herausgefahren ist. Sobald der Sperrkonus 32 zur Anlage an das Zahnrad 35 kommt, wird das Zahnrad 35 und das mit ihm in Eingriff stehende Zahnrad 34 blockiert. Dadurch nimmt der Drehbolzen 25 das blockierte Zahnrad 34 und die Ritzelwelle 31 mit, so daß die Ritzelwelle 31 um die Achse 24 schwenkt. Dabei nimmt die Ritzelwelle 31, die in der Lagerbohrung 29 der Stange 2 gelagert ist, diese mit, so daß die Stange 2 schwenkt. Diese Schwenkbewegung endet, sobald die Ritzelwelle 31 das Ende des Schlitzes 39 erreicht.

Zur Klarstellung sei erwähnt, daß in Figur 8 der linke Sperrkonus nicht dargestellt ist.

Für den elektrischen Antrieb ist vorgesehen, daß dieser abschaltet, sobald die Last einen vorher eingestellten Grenzwert überschreitet. Dadurch werden Schäden vermieden, falls beim Bewegen der Stange 2 Fremdkörper den weiteren Betrieb behindern sollten. Damit die Verstellung nicht während der Fahrt des Fahrzeuges eingeleitet werden kann, ist außerdem vorgesehen, daß die Anhängerkupplung nur von außerhalb der Fahrgastzelle betätigt werden kann. Besonders vorteilhaft ist es, wenn die Betätigungseinrichtung, zum Beispiel ein Schalter, im Kofferraum des Fahrzeugs angeordnet ist.

Auf diese Weise ist eine Fahrzeugkupplung geschaffen, die leicht und bequem in eine Lage gebracht werden kann, in der sie nicht mehr stört.

### Bezugszeichenliste

- 1: Anhängerkupplung
- 2: Stange
- 3: Kugel
- 4: Führungshülse
- 5: Motor
- 6: Planetengetriebe
- 7: Stirnradgetriebe
- 8: Verstellspindel
- 9: Montageflansch
- 10: Gewindebohrungen
- 11: Führungsfläche
- 12: Führungsfläche
- 13: Konus
- 14: Innenkonus
- 15: Führungsschlitz
- 16: Kulisse
- 17: Innengewinde
- 18 19: Platte
- 20: Platte
- 21: Schwenkantrieb
- 22: Platte
- 23: Platte
- 24: Achse
- 25: Drehbolzen
- 26: Schenkel
- 27: Schlitz
- 28: Lagerbohrung
- 29: Lagerbohrung
- 30: Innengewinde
- 31: Ritzelwelle
- 32: Sperrkonus
- 33: Verzahnung
- 34: Zahnrad
- 35: Zahnrad
- 36: Welle
- 37: Außengewinde
- 38: Verriegelungsöffnung
- 39: Schlitz
- 40: Zahnrad
- 41: Schwenkantrieb
- 42: Stange

## Patentansprüche

1. Anhängerkupplung an einem Kraftfahrzeug, mit einer eine Kugel (3) tragenden Zugstange (2), die zwischen einer Ruhestellung und einer Betriebsstellung mittels eines Spindel-Mutter-Antriebes axial verstellbar ausgebildet ist, **dadurch gekennzeichnet, dass** die Zugstange (2) selbst als Mutter des Spindel-Mutter-Antriebes ausgebildet, um ihre Achse drehbar ausgebildet und zum Verstellen in Axial- und Drehrichtung mit einem Motor verbunden ist.

2. Anhängerkupplung nach Anspruch 1, **dadurch gekennzeichnet, dass** die Zugstange (2) eine axiale Bohrung mit Innengewinde (17) als Mutter des Spindel-Mutter-Antriebes aufweist.

3. Anhängerkupplung nach Anspruch 1 oder 2, **dadurch gekennzeichnet, dass** innerhalb der axialen Bohrung der Zugstange (2) eine Gewindestange als Verstellspindel (8) des Spindel-Mutter-Antriebes angeordnet ist.

4. Anhängerkupplung nach einem der Ansprüche 1 bis 3, **dadurch gekennzeichnet, dass** die Verstellspindel (8) einen Antriebsmotor (5, 6, 7), vorzugsweise einen elektrischen Antrieb, aufweist.

5. Anhängerkupplung nach einem der Ansprüche 1 bis 4, **dadurch gekennzeichnet, dass** die Zugstange (2) in ihrer Betriebsstellung sich selbsttätig verriegelnd ausgebildet ist.

6. Anhängerkupplung nach einem der Ansprüche 1 bis 5, **dadurch gekennzeichnet, dass** zur Drehung der Zugstange (2) eine Kulissenführung (15, 16) vorgesehen ist.

7. Anhängerkupplung an einem Kraftfahrzeug, mit einer eine Kugel (3) tragenden Zugstange (2), die zwischen einer Ruhestellung und einer verriegelten Betriebsstellung schwenkbar ausgebildet ist, **dadurch gekennzeichnet, dass** die Zugstange (2) für die Schwenk-, Ver- und Entriegelungsbewegung einen Antrieb, vorzugsweise einen elektrischen Antriebsmotor (5, 6, 7), für ein Schwenken um etwa 90° aufweist und sich bei dem Schwenken in ihre oder aus ihrer Betriebsstellung selbsttätig formschlüssig ver- und entriegelnd ausgebildet ist, indem in der Zugstange (2) ein Sperrkonus (32) verschiebbar gelagert ist, der die Zugstange (2) in ihrer Betriebsstellung selbsttätig verriegelnd und in eine Verriegelungsöffnung (38) einfahrbar ausgebildet ist.

8. Anhängerkupplung nach Anspruch 7, **dadurch gekennzeichnet, dass** die Zugstange (2) auf einer Antriebsachse (24) drehbar gelagert ist und von einer in die Antriebsachse (24) eingreifenden Ritzelwelle (31) mitnehmbar ausgebildet ist.

9. Anhängerkupplung nach Anspruch 7 oder 8, **dadurch gekennzeichnet, dass** der Sperrkonus (32) durch einen von seinem Außengewinde (37) und einem Innengewinde (30) der Zugstange (2) gebildeten Spindel-Mutter-Antrieb verschiebbar ist, der über ein Zahnrad (35) von der Ritzelwelle (31) der Zugstange (2) antreibbar ausgebildet ist.

10. Anhängerkupplung nach einem der Ansprüche 1 bis 9, **dadurch gekennzeichnet, dass** der Zugstange (2) ein Kuppelstück für die elektrische Versorgung eines Anhängers zugeordnet ist, wobei das Kuppelstück ebenfalls verstellbar, vorzugsweise kraftverstellbar, ist.

11. Anhängerkupplung nach einem der Ansprüche 1 bis 10, **dadurch gekennzeichnet, dass** die Zugstange (2) einen Antrieb (5, 6, 7, 41) aufweist, der über eine Wirkverbindung schaltbar ist und dessen Schalter außerhalb einer Fahrgastzelle, vorzugsweise im Kofferraum, eines Fahrzeugs angeordnet ist.

## Claims

1. Trailer coupling on a motor vehicle, having a towing bar (2), which carries a ball (3) and is designed so as to be axially displaceable between an inoperative position and an operating position by means of a spindle/nut drive, **characterized in that** the towing bar (2) itself takes the form of the nut of the spindle/nut drive, is designed so as to be rotatable about its axis, and for displacement in axial direction and in the direction of rotation is connected to a motor.

2. Trailer coupling according to claim 1, **characterized in that** the towing bar (2) has an axial bore with an internal thread (17) serving as the nut of the spindle/nut drive.

3. Trailer coupling according to claim 1 or 2, **characterized in that** disposed inside the axial bore of the towing bar (2) is a threaded rod serving as the adjusting spindle (8) of the spindle/nut drive.

4. Trailer coupling according to one of claims 1 to 3, **characterized in that** the adjusting spindle (8) has a drive motor (5, 6, 7), preferably an electric drive.

5. Trailer coupling according to one of claims 1 to 4, **characterized in that** the towing bar (2) is designed so as to lock automatically in its operating position.

6. Trailer coupling according to one of claims 1 to 5, **characterized in that** a link guide (15, 16) is provided for rotation of the towing bar (2).

7. Trailer coupling on a motor vehicle, having a towing bar (2), which carries a ball (3) and is designed so as to be capable of swivelling between an inoperative position and a locked operating position, **characterized in that** the towing bar (2) for the swivelling, locking and unlocking motions comprises a drive, preferably an electric drive motor (5, 6, 7), for a swivelling through approximately 90° and is designed so that it positively locks and unlocks automatically upon swivelling into or out of its operating position **in that** there is displaceably supported in the towing bar (2) a locking cone (32), which is designed so as to lock the towing bar (2) automatically in its operating position and so as to be movable into a locking opening (38).

8. Trailer coupling according to claim 7, **characterized in that** the towing bar (2) is rotatably supported on a driving axle (24) and designed so as to be drivable by means of a pinion shaft (31), which engages into the driving axle (24).

9. Trailer coupling according to claim 7 or 8, **characterized in that** the locking cone (32) is displaceable by means of a spindle/nut drive, which is formed by the external thread (37) of the locking cone (32) and by an internal thread (30) of the towing bar (2) and is designed so as to be drivable via a gear wheel (35) by the pinion shaft (31) of the towing bar (2).

10. Trailer coupling according to one of claims 1 to 9, **characterized in that** a coupling piece for the electric supply of a trailer is associated with the towing bar (2), the coupling piece being likewise displaceable, preferably power-displaceable.

11. Trailer coupling according to one of claims 1 to 10, **characterized in that** the towing bar (2) comprises a drive (5, 6, 7, 41), which is operable via an effective connection and the switch of which is disposed outside of a passenger cell, preferably in the luggage compartment, of a vehicle.

## Revendications

1. Dispositif d'attelage de remorque pour véhicules automobiles, comprenant une barre d'attelage (2) portant une boule (3) et réglable axialement par un entraîneur à broche et écrou, entre une position de repos et une position de service,
**caractérisé en ce que**
la barre d'attelage (2) elle-même forme l'écrou de l'entraîneur à broche qui tourne autour de son axe et est reliée à un moteur assurant son réglage axial et en rotation.

2. Dispositif d'attelage selon la revendication 1,
**caractérisé en ce que**
la barre (2) comporte un alésage axial portant un filetage interne (17) et constituant l'écrou de l'entraînement à broche et écrou.

3. Dispositif d'attelage selon les revendications 1 ou 2,
**caractérisé en ce qu'**
à l'intérieur de l'alésage axial de la barre d'attelage (2) est montée une tige filetée constituant la broche (8) de l'entraîneur à broche et écrou.

4. Dispositif d'attelage selon l'une des revendications 1 à 3,
**caractérisé en ce que**
la broche (8) est équipée du moteur d'entraînement (5, 6, 7), électrique de préférence.

5. Dispositif d'attelage selon l'une des revendications 1 à 4,
**caractérisé en ce que**
la barre (2) est réalisée de manière à se verrouiller automatiquement en position de service.

6. Dispositif d'attelage selon l'une des revendications 1 à 5,
**caractérisé en ce que**
pour faire tourner la barre (2), il est prévu un guidage coulissant (15, 16).

7. Dispositif d'attelage pour véhicules automobiles, comportant une barre d'attelage (2) portant une boule (3) et pouvant basculer entre une position de repos et une position verrouillée de service,
**caractérisé en ce que**
la barre d'attelage (2), pour assurer ses mouvements de basculement, de verrouillage et de déverrouillage est équipée d'un entraîneur, de préférence un moteur électrique (5, 6, 7) pour basculer d'environ 90°, et cette barre, lorsqu'elle bascule pour venir occuper sa position de service ou pour la quitter, est réalisée de manière à se verrouiller ou se déverrouiller automatiquement par combinaison de formes, à l'aide d'un cône de blocage (32) qui, monté coulissant dans la barre (2), verrouille la barre (2) automatiquement en position de service en pénétrant dans une ouverture de verrou (38).

8. Dispositif d'attelage selon la revendication 7,
**caractérisé en ce que**
la barre d'attelage (2) peut tourner sur un axe d'entraînement (24) et être entraînée par un arbre de pignon (31) en prise avec l'axe d'entraînement (24).

9. Dispositif d'attelage selon les revendications 7 ou 8,
**caractérisé en ce que**
le cône de blocage (32) peut coulisser par l'effet d'un entraîneur à broche formé par son filetage extérieur (37) et le filetage intérieur (30) de la barre (2), et réalisé de manière à pouvoir être entraîné par l'intermédiaire d'un pignon (35) par l'arbre de pignon (31) de la barre (2).

10. Dispositif d'attelage selon l'une des revendications 1 à 9,
**caractérisé en ce qu'**
à la barre d'attaque (2) est associée une pièce d'accouplement permettant l'alimentation électrique d'une remorque, cette pièce étant également déplaçable, de préférence par la force.

11. Dispositif d'attelage selon l'une des revendications 1 à 10,
**caractérisé en ce que**
la barre d'attelage (2) est équipée d'un entraîneur (5, 6, 7, 41) qui peut être enclenché par une liaison active dont le contacteur se trouve en dehors de l'habitacle du véhicule, de préférence dans le coffre de celui-ci.
